# NEUE EUROPÄISCHE PATENTSCHRIFT

(11) **EP 1 868 328 B2**
(45) Veröffentlichungstag und Bekanntmachung des Hinweises auf die Entscheidung über den Einspruch: **01.03.2017**
(45) Hinweis auf die Patenterteilung: 05.10.2011
(21) Anmeldenummer: 06012055.7
(22) Anmeldetag: 12.06.2006
(51) Int. Cl.: H04L 12/861

(54) **Verfahren zum Betrieb eines Automatisierungsgerätes und Automatisierungsgerät**
Method for operating an automation device and automation device
Procédé d'opération d'un dispositif d'automation et dispositif d'automation

(43) Veröffentlichungstag der Anmeldung: 19.12.2007
(73) Patentinhaber: Siemens Aktiengesellschaft, 80333 München (DE)
(72) Erfinder: Diesch, Wilhelm, 83624 Otterfing (DE); Klotz, Dieter, Dr., 90768 Fürth (DE); Sieberling, Patrik, 90556 Seukendorf (DE); Werner, Wolfgang, 92546 Schmidgaden (DE)

(56) Entgegenhaltungen:
- EP-A- 0 990 964
- EP-A- 1 594 063
- DE-A1- 10 141 187

## Beschreibung

Die vorliegende Erfindung betrifft ein Verfahren zum Betrieb eines zum Empfangen von Telegrammen vorgesehenen Automatisierungsgerätes sowie ein nach dem Verfahren arbeitendes oder zur Ausführung des Verfahrens vorgesehenes Automatisierungsgerät.

Gattungsgemäße Verfahren und entsprechende Automatisierungsgeräte sind an sich bekannt. So liefert z. B. die Anmelderin der vorliegenden Erfindung unter der Marke SIMATIC Automatisierungsgeräte, die in einem Kommunikationsverbund kommunikativ verbindbar sind und die im Betrieb entsprechend einem normierten Layout (Protokoll) Daten austauschen, also kommunizieren. Das jeweilige Protokoll ist dabei für das jeweilige Kommunikationsmedium und/oder eine Topologie des Kommunikationsverbunds und/oder einen jeweiligen Anwendungsfall vorgegeben oder vorgebbar.

Bei einer Kommunikation zwischen gleichartigen oder unterschiedlichen Automatisierungsgeräten in einem durch untereinander kommunikativ vernetzte Automatisierungsgeräte gebildeten Kommunikationsverbund wird zwischen unterschiedlichen Kommunikationsbeziehungen unterschieden. Eine mögliche Kommunikationsbeziehung besteht zwischen einem ersten Automatisierungsgerät oder Kommunikationsteilnehmer (Sender) und einem weiteren Kommunikationsteilnehmer oder Automatisierungsgerät (Empfänger), für den bzw. das die vom Sender zum Transfer vorgesehenen Daten bestimmt sind. Genauso kann eine Kommunikationsbeziehung zwischen einem Sender und einer Vielzahl von Empfängern bestehen. Insbesondere bei einer Kommunikationsbeziehung zwischen einem Sender und einer Vielzahl von Empfängern, die üblicherweise über so genannte Broadcast-oder Multicast-Telegramme abgewickelt wird, ergibt sich bei der Verarbeitung der beim jeweiligen Empfänger eingehenden Daten dann ein Problem, wenn die Datenmenge nicht innerhalb eines Telegramms übermittelt werden kann. Wenn die zu übertragende Datenmenge nicht mit einem einzigen Telegramm übertragbar ist, wird die Datenmenge nach dem jeweiligen Datenübertragungsprotokoll auf mehrere aufeinander folgende Telegramme aufgeteilt. Es ergibt sich also eine Fragmentierung der übermittelten Daten. Wenn während einer Folge von im Zusammenhang mit einer Kommunikationsbeziehung eingehenden Telegrammen beim jeweiligen Empfänger auch Telegramme, die zu anderen Kommunikationsbeziehungen gehören, eingehen, ist bisher eine aufwendige Verwaltung und Zuordnung der eingehenden Daten notwendig. Ein Beispiel dafür ergibt sich aus der DE 101 41 187 A1, die einen elektronischen Schaltkreis und ein Verfahren für eine Kommunikationsschnittstelle mit Zwischenspeicherung zeigt, wobei eine Empfangsliste, eine Sendeliste und ein Zwischenspeicher verwaltet werden und in dem Zwischenspeicher gemäß der Empfangsliste vollständig empfangene Datentelegramme und gemäß der Sendeliste zu sendende Datentelegramme eingetragen werden, wobei sowohl ein Empfangspuffer als auch ein Sendepuffer mit dem Zwischenspeicher verbindbar sind.

Ausgehend von diesem Nachteil im Stand der Technik besteht eine Aufgabe der Erfindung darin, ein einfaches Verfahren und eine korrespondierende Vorrichtung anzugeben, mit dem bzw. der eine eindeutige Zuordnung von eingehenden Daten, insbesondere zu einem bestimmten Sender und/oder einer bestimmten Kommunikationsbeziehung, jederzeit möglich ist.

Diese Aufgabe wird mit einem Verfahren mit den Merkmalen des Anspruchs 1 gelöst. Danach ist zum Betrieb eines zum Empfangen von Telegrammen bestimmten und geeigneten Automatisierungsgerätes gemäß der Erfindung vorgesehen, dass das Automatisierungsgerät zwischen aktiven und neuen Kommunikationsbeziehungen unterscheidet, für jede neue Kommunikationsbeziehung - soweit verfügbar - eine bestimmte Ressource auswählt und diese daraufhin für diese Kommunikationsbeziehung, die damit zur aktiven Kommunikationsbeziehung wird, exklusiv verwendet. Dazu ist dem Automatisierungsgerät für eingehende oder empfangene Telegramme ein als Ressourcenpool fungierender Speicherbereich, der zumindest ein Speichersegment umfasst, welches zumindest einen Speicherabschnitt aufweist, zugeordnet. Zugeordnet meint in diesem Zusammenhang, dass der Speicherbereich in einem von dem Automatisierungsgerät umfassten, lokalen Speicher oder in einem entfernten, mit dem Automatisierungsgerät kommunikativ verbundenen Speicher bereitgestellt ist oder wird. Das Automatisierungsgerät unterscheidet zwischen aktiven und neuen Kommunikationsbeziehungen mit einem entfernten Kommunikationsteilnehmer, also einem jeweiligen Sender. Das Automatisierungsgerät selbst fungiert in der Kommunikationsbeziehung als Empfänger und wählt für jede neue Kommunikationsbeziehung, also eine noch nicht aktive und damit letztlich noch nicht "bekannte" Kommunikationsbeziehung, aus dem Ressourcenpool eine freie Ressource, also ein Speichersegment und/oder einen Speicherabschnitt aus. Mit der Auswahl einer solchen freien Ressource, die für diese Kommunikationsbeziehung im Folgenden verwendet wird, wird die jeweilige Kommunikationsbeziehung zur aktiven Kommunikationsbeziehung. Die Kommunikationsbeziehung erfolgt im Weiteren ausschließlich unter Verwendung der ausgewählten Ressource.

Die Verwendung einer freien Ressource, also eines ausgewählten Speichersegments oder eines ausgewählten Speicherabschnitts, für eine aktive Kommunikationsbeziehung wird anhand einer den entfernten Kommunikationsteilnehmer identifizierenden Senderkennung sichergestellt. Dazu ist mittels geeigneter Vorkehrungen, insbesondere aufgrund entsprechender Projektierung gewährleistet, dass die Senderkennung innerhalb des jeweiligen Kommunikationsverbunds eindeutig ist.

Wenn die Senderkennung eine den entfernten Kommunikationsteilnehmer, den jeweiligen Sender, identifizierende Adresse sowie ein vom jeweiligen Sender in das jeweilige Telegramm eingefügtes Ordnungskriterium umfasst, wird eine nicht nur auf den entfernten Kommunikationsteilnehmer bezogene Unterscheidung von Kommunikationsbeziehungen möglich. Grundsätzlich erfolgt die Unterscheidung von Kommunikationsbeziehungen anhand der jeweiligen Senderkennung in der Art, dass diese den jeweiligen Sender, also das Automatisierungsgerät, welches das jeweilige Telegramm auf den Bus gegeben hat, referenziert. In einer bevorzugten Ausführungsform umfasst die Senderkennung eine den Sender identifizierende Adresse oder eine in dieser Hinsicht vergleichbar eindeutige Referenz sowie ein Ordnungskriterium. Eine solche Adresse ist für jeden Kommunikationsteilnehmer eindeutig, z. B. aufgrund einer entsprechenden Projektierung, vorgegeben. Als Ordnungskriterium kommt grundsätzlich jedes von anderen Daten unterscheidbare Datum, z. B. eine Zahl aus der Menge der natürlichen Zahlen, in Betracht. Ein Ordnungskriterium wird für einen Sender oder eine auf dem Sender ablaufende Applikation z. B. aufgrund einer entsprechenden Projektierung festgelegt. Damit ist als Ausgangspunkt einer neuen oder bestehenden Kommunikationsbeziehung einerseits der jeweilige Kommunikationsteilnehmer sowie eine darauf ablaufende Applikation oder jede andere Funktionseinheit, auf die sich das Ordnungskriterium bezieht, unterscheidbar. Auf diese Art und Weise sind auch Kommunikationsbeziehungen zwischen einem ersten, als Sender fungierenden Automatisierungsgerät und einem zweiten, als Empfänger fungierenden Automatisierungsgerät dann noch unterscheidbar, wenn auf Seiten des Senders mehrere Softwareapplikationen Telegramme an den Empfänger senden. Ohne die Verwendung des Ordnungskriteriums würden zur Auswertung des Telegramms und zur Auswahl freier Ressourcen als Senderund/oder Empfängerkennung nur Adressdaten oder dergleichen zur Verfügung stehen. Bei gleichen beteiligten Geräten, also z. B. zwei Softwareapplikationen, die vom gleichen, als Sender fungierenden Automatisierungsgerät senden, ergäbe sich dann jedoch auch eine gleiche Senderkennung. Zudem wären die Telegramme im gewählten Beispiel auch für den gleichen Empfänger bestimmt. Damit ist nur anhand einer aus Adressdaten gebildeten Senderkennung (und/oder der Empfängerkennung) keine eindeutige Unterscheidbarkeit der jeweiligen Kommunikationsbeziehungen gegeben. Mit der Hinzuziehung des Ordnungskriteriums, das für jede Applikation, z. B. aufgrund einer geeigneten Projektierung, eindeutig vergeben wird oder vergebbar ist, bei der Bildung der Senderkennung bleiben auch Kommunikationsbeziehungen, die von einem gleichen als Sender fungierenden Automatisierungsgerät ausgehen, unterscheidbar.

Weiter bevorzugt ist vorgesehen, dass das Automatisierungsgerät bei einem eingehenden Telegramm die jeweilige Senderkennung anhand von zugelassenen Senderkennungen prüft. Dazu ist eine Anzahl zugelassener Senderkennungen in einem dem Automatisierungsgerät im oben bereits erläuterten Sinne zugeordneten Speicher hinterlegt oder hinterlegbar. Die oder jede zugelassene Senderkennung ergibt sich dabei insbesondere aufgrund entsprechender Projektierung, wenn also z. B. eine Kommunikationsbeziehung zwischen einer bestimmten Applikation eines bestimmten ersten Automatisierungsgeräts mit einer bestimmten Applikation eines bestimmten zweiten Automatisierungsgeräts vorgesehen wird und spätestens in diesem Zusammenhang eine Senderkennung, also insbesondere die Kombination aus Adresse und Ordnungskriterium, festgelegt wird. Wenn eine solche Überprüfung fehlschlägt, steht fest, dass das jeweilige Telegramm nicht für den Empfänger, bei dem es eingetroffen ist, bestimmt war. An den Sender kann daraufhin, also nahezu ohne Zeitverzug, eine diesbezügliche Meldung abgesetzt werden. Ohne eine derartige Überprüfung ist das Erkennen von nicht für einen bestimmten Empfänger vorgesehenen, dort aber eingegangenen Telegrammen erst nach einer inhaltlichen Auswertung des Telegramms möglich. Der Zeitversatz zwischen einer daraufhin evtl. möglichen Meldung an den Sender und dem ursprünglichen Telegrammversand steht in keinem Verhältnis zu dem Zeitversatz, der sich zwischen Telegrammversand und Meldung ergibt, wenn unmittelbar beim Empfang eines Telegramms dessen Senderkennung auf Übereinstimmung mit zugelassenen Senderkennungen überprüft wird.

Gemäß einem weiteren Aspekt der Erfindung ist vorgesehen, dass eine Ressource, also ein Speichersegment und/oder ein Speicherabschnitt, nur dann ausgewählt wird, wenn die jeweilige Senderkennung einer zugelassenen Senderkennung entspricht. Damit ist z. B. sichergestellt, dass im empfangenen Telegramm enthaltene Daten nur dann Speicherplatz auf Seiten des Empfängers belegen, wenn die jeweiligen Daten tatsächlich für den jeweiligen Empfänger bestimmt sind.

Bevorzugt erfolgt die Überprüfung der Senderkennung anhand einer zugelassenen Senderkennung durch paarweise Prüfung von Adresse und Ordnungskriterium. Dann wird ein Telegramm oder eine zugrunde liegende Kommunikationsbeziehung nur dann als zulässig erkannt, wenn sowohl die Adresse und auch das Ordnungskriterium mit korrespondierenden Einträgen in der zugelassenen Senderkennung übereinstimmen. Eine einfache Implementierung einer solchen paarweisen Prüfung ist dann möglich, wenn Adresse und Ordnungskriterium sowohl in Bezug auf die Senderkennung als auch in Bezug auf die jeweils zu prüfende zugelassene Senderkennung zu einem Datum zusammengefasst sind.

Wenn jeder zugelassenen Senderkennung oder anhand jeder zugelassenen Senderkennung eine Ressource, also ein Speichersegment und/oder ein Speicherabschnitt, für das empfangene Telegramm zugeordnet bzw. auswählbar ist, wird die jeweils verwendete oder zur Verwendung vorgesehene Ressource durch den Empfänger vorgegeben, wobei die Zuordnung veränderlich sein kann und eine Auswahl zur Laufzeit des Verfahrens in Ansehung einer Verfügbarkeit von Ressourcen erfolgen kann.

Entsprechend einem weiteren Aspekt der Erfindung ist vorgesehen, dass das Ordnungskriterium einer zugelassenen Senderkennung ein jeweiliges Speichersegment festlegt und dass in dem Speichersegment ein Speicherabschnitt ausgewählt und verwendet wird. Alternativ kann auch vorgesehen sein, dass die Adresse einer zugelassenen Senderkennung ein jeweiliges Speichersegment festlegt und dass in dem Speichersegment ein Speicherabschnitt ausgewählt und verwendet wird. Bei beiden Alternativen wird anhand eines den Ursprung des Telegramms charakterisierenden Kriteriums ein Speichersegment ausgewählt. Das Speichersegment steht damit exklusiv für Telegramme, die in der Senderkennung die jeweilige Adresse oder das jeweilige Ordnungskriterium aufweisen, zur Verfügung. Innerhalb des Speichersegments erfolgt dann eine Auswahl eines Speicherabschnitts als eigentlicher Speicherort für das empfangene Telegramm oder die in dem Telegramm enthaltenen Daten je nach Verfügbarkeit solcher Speicherabschnitte. Nach einer solchen Auswahl wird für das Automatisierungsgerät protokolliert, welcher Speicherabschnitt ausgewählt wurde. Bei nachfolgenden Kommunikationsbeziehungen unter derselben Senderkennung wird das gleiche Speichersegment ausgewählt. Aufgrund der Protokollierung der in dieser bekannten Kommunikationsbeziehung verwendeten Ressourcen, also auf einer untersten Ebene aufgrund der Protokollierung des jeweiligen Speicherabschnitts, wird diese bzw. dieser für jede weitere Kommunikation in dieser Kommunikationsbeziehung verwendet. Bevorzugt wird für jeden dieser Speicherabschnitte verwaltet, an welcher Stelle ein Eintrag neuer Daten möglich ist, ohne dabei alte, noch nicht ausgewertete Daten zu überschreiben.

Beim Empfang von Daten in Form von Telegrammen im Rahmen einer aktiven Kommunikationsbeziehung werden die in den jeweils eingehenden Telegrammen enthaltenen Daten anhand der dieser Kommunikationsbeziehung zugewiesenen Ressource stets exklusiv in dem jeweiligen Speicherabschnitt abgelegt. Wenn während des Empfangs von Telegrammen in dieser Kommunikationsbeziehung Telegramme aus anderen Kommunikationsbeziehungen bei dem jeweiligen Automatisierungsgerät eingehen, kann es zu keinen Konflikten kommen, da die in den Telegrammen solcher weiterer Kommunikationsbeziehungen empfangenen Daten anderen Ressourcen, also anderen Speicherabschnitten, ggf. auch anderen Speichersegmenten, zugeordnet sind und insoweit ohne eine Gefahr oder auch nur eine Möglichkeit einer Kollision mit Daten aus anderen Kommunikationsbeziehungen abgelegt werden.

Bevorzugt wird eine ausgewählte Ressource wieder freigegeben, wenn ein Datentransfer in der jeweiligen Kommunikationsbeziehung abgeschlossen ist. Auf diese Art und Weise ist gewährleistet, dass ausgewählte Ressourcen für andere Kommunikationsbeziehungen wieder verfügbar werden, wenn die in einer abgeschlossenen Kommunikationsbeziehung übermittelten Daten empfangen und/oder ausgewertet sind.

Weiter bevorzugt ist vorgesehen, dass einem oder dem entfernten Kommunikationsteilnehmer, also dem Sender, eine Fehlermeldung dann übermittelt wird, wenn für eine neue Kommunikationsbeziehung beim Empfänger keine freie Ressource zur Verfügung steht. Der jeweilige entfernten Kommunikationsteilnehmer, dem eine solche Fehlermeldung zugeht, muss dann seinen Sendewunsch, also die Übermittlung des jeweiligen Telegramms, so lange zurückstellen, bis eine der beim Empfänger momentan verwendeten Ressourcen wieder frei wird, nachdem eine darunter abgewickelte Kommunikationsbeziehung beendet ist.

Das erfindungsgemäße Verfahren kann in Software, Firmware und/oder in Hardware implementiert sein. Die Erfindung betrifft entsprechend auch ein Computerprogramm mit durch einen Computer ausführbaren Programmcodeanweisungen zur Implementierung des oben beschriebenen Verfahrens, wenn das Computerprogramm auf einem Computer ausgeführt wird, und ein Computerprogrammprodukt, insbesondere ein Speichermedium, mit einem durch einen Computer ausführbaren derartigen Computerprogramm.

Gleichfalls betrifft die Erfindung auch ein Automatisierungsgerät mit Programmcodemitteln, insbesondere einer Implementation des oben beschriebenen Verfahrens in Software und/oder Hardware, bei welchem dem Automatisierungsgerät ein Ressourcenpool zugeordnet ist, bei welchem eingehende Telegramme als zu einer aktiven oder einer neuen Kommunikationsbeziehung mit einem entfernten Kommunikationsteilnehmer gehörig unterscheidbar sind und bei welchem für jede neue Kommunikationsbeziehung aus dem Ressourcenpool eine freie Ressource auswählbar und daraufhin für diese Kommunikationsbeziehung, die damit zur aktiven Kommunikationsbeziehung wird, verwendbar ist. In einer besonders bevorzugten Ausführungsform eines solchen Automatisierungsgerätes ist für das Automatisierungsgerät eine Verarbeitungseinheit, also z. B. ein so genannter anwenderspezifischer integrierter Schaltkreis (ASIC) oder dergleichen, z. B. FPGA, etc., vorgesehen.

Die mit der Anmeldung eingereichten Patentansprüche sind Formulierungsvorschläge ohne Präjudiz für die Erzielung weitergehenden Patentschutzes. Die Anmelderin behält sich vor, noch weitere, bisher nur in der Beschreibung und/oder Zeichnung offenbarte Merkmalskombinationen zu beanspruchen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

### Darin zeigen

- FIG 1: eine schematisch vereinfachte Darstellung eines Automatisierungssystems,
- FIG 2: eine schematisch vereinfachte Darstellung eines Datenaustausches zwischen zwei Automatisierungsgeräten und
- FIG 3: ein gemäß der Erfindung ausgestaltetes Automatisierungsgerät.

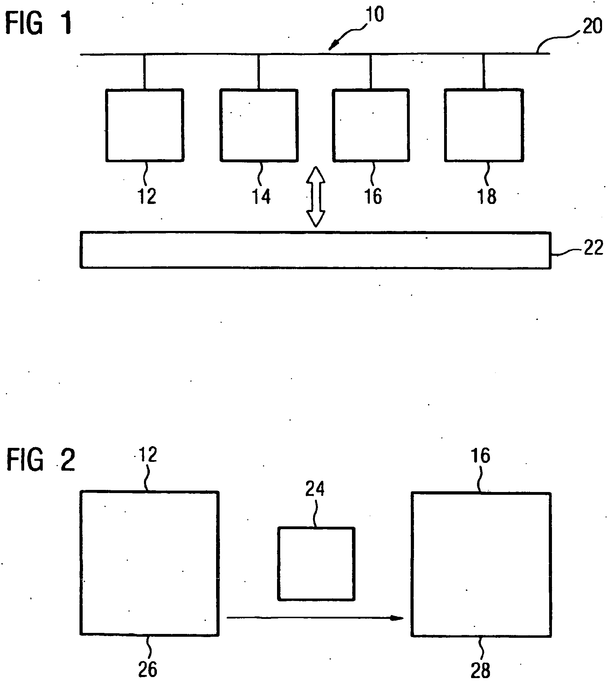

FIG 1 zeigt eine schematische vereinfachte Darstellung eines Automatisierungssystems 10 mit einer Anzahl kommunikativ miteinander verbundener Kommunikationsteilnehmer 12, 14, 16, 18. Die kommunikative Verbindung zwischen den einzelnen Kommunikationsteilnehmern 12 bis 18 erfolgt dabei auf Basis eines Busses 20, insbesondere eines Feldbusses, z. B. dem so genannten PROFIBUS. Das Automatisierungssystem 10 mit seinen Automatisierungsgeräten 12 bis 18 ist gemäß der exemplarisch gewählten Darstellung in an sich bekannter Art und Weise zur Steuerung und/oder Überwachung eines nicht näher dargestellten technischen Prozesses 22 vorgesehen.

FIG 2 zeigt in ebenfalls schematisch vereinfachter Art und Weise einen Datenaustausch zwischen zwei Automatisierungsgeräten 12 bis 18 des Automatisierungssystems 10 (FIG 1), also z. B. einem ersten Automatisierungsgerät 12 und einem zweiten Automatisierungsgerät 16. Der Datenaustausch erfolgt dabei über den Bus 20 (FIG 1) und wird nach einem für den Bus 20 vorgegebenen Protokoll durch Übermittlung von Telegrammen 24 zwischen dem in der dargestellten Situation als Sender 26 fungierenden ersten Automatisierungsgerät 12 und dem als Empfänger 28 fungierenden zweiten Automatisierungsgerät 16 abgewickelt.

Wenn die vom Sender 26 zum Empfänger 28 zu übermittelnden Daten einen solchen Umfang annehmen, dass sie nicht innerhalb eines einzigen Telegramms 24, das nach dem jeweiligen Protokoll eine fest vorgegebene Größe hat, untergebracht werden können, erfolgt die Übermittlung solcher Daten durch eine Mehrzahl aufeinander folgender Telegramme 24. Wenn bei einem Empfänger 28 gleichzeitig oder quasi gleichzeitig von mehreren Sendern 26 oder vom gleichen Sender 26 eine Folge von zu unterschiedlichen Datenübertragungsvorgängen/Kommunikationsbeziehungen gehörigen Telegrammen 24 eingeht, ist eine eindeutige Zuordnung der einzelnen Telegramme 24 zur jeweiligen Kommunikationsbeziehung erschwert.

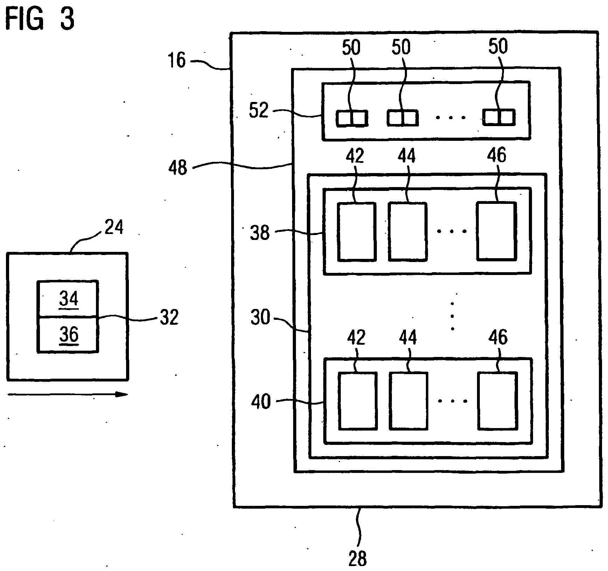

Gemäß der Erfindung ist zur Vermeidung oder zumindest Reduktion dieses Nachteils vorgesehen, dass jedem Automatisierungsgerät 12 bis 18 (FIG 1) ein als Ressourcenpool fungierender Speicherbereich 30 zugeordnet ist. Dies ist in FIG 3 anhand des als Empfänger 28 fungierenden Automatisierungsgerätes/Kommunikationsteilnehmers 16 dargestellt. Ein beim Empfänger 28 eingehendes oder vom Empfänger 28 empfangenes Telegramm 24 ist dabei für den jeweiligen Empfänger 28 als zu einer aktiven oder einer neuen Kommunikationsbeziehung mit einem entfernten Kommunikationsteilnehmer 12, also dem jeweiligen Sender 26 (FIG 2), gehörig unterscheidbar.

Diese Unterscheidung erfolgt zumindest anhand einer von dem Telegramm 24 umfassten Senderkennung 32, die den jeweiligen Sender 26, also das Automatisierungsgerät 12 bis 18, das das jeweilige Telegramm 24 auf den Bus 20 gegeben hat, referenziert. In einer bevorzugten Ausführungsform umfasst die Senderkennung 32 eine den Sender 26 identifizierende Adresse 34 oder eine in dieser Hinsicht vergleichbar eindeutige Referenz sowie ein Ordnungskriterium 36.

Eine solche Adresse 34 ist für jeden Kommunikationsteilnehmer eindeutig, z. B. aufgrund einer entsprechenden Projektierung, vorgegeben. Als Ordnungskriterium 36 kommt grundsätzlich jedes von anderen Daten unterscheidbare Datum, z. B. eine Zahl aus der Menge der natürlichen Zahlen, in Betracht. Ein Ordnungskriterium 36 wird für einen Sender 26 oder eine auf dem Sender 26 ablaufende Applikation z. B. aufgrund einer entsprechenden Projektierung festgelegt.

Wenn ein Empfänger 28 unter einer bestimmten Senderkennung 32 bisher keine Telegramme 24 empfangen hat, entsteht zumindest mit einem Empfang eines ersten Telegramms 24 mit dieser Senderkennung 32 eine neue Kommunikationsbeziehung. Eine neue Kommunikationsbeziehung entsteht damit z. B. auch dann, wenn von einem Sender 26 bereits Telegramme 24 unter einem ersten Ordnungskriterium 36 empfangen wurden und nunmehr ein Telegramm 24 mit einem von diesem Sender 26 bisher nicht verwendeten Ordnungskriterium 36 eingeht. Dann ist als Ursprung des Telegramms 24 nicht nur der jeweilige Sender 26, also z. B. das jeweilige Automatisierungsgerät 12 bis 18, sondern z. B. auch eine auf dem jeweiligen Automatisierungsgerät 12 bis 18 ablaufende Applikation oder dergleichen unterscheidbar.

Sobald von einem Sender 26 zumindest ein Telegramm 24 mit einer bestimmten Senderkennung 32 empfangen worden ist, werden weitere von diesem Sender 26 empfangene Telegramme 24 als zu der mit dem ersten Telegramm 24 mit dieser Senderkennung 32 begonnenen, aktiven Kommunikationsbeziehung gehörig betrachtet.

Wird eine neue Kommunikationsbeziehung, also ein Telegramm 24, das eine Senderkennung 32 aufweist, für die derzeit keine aktive Kommunikationsbeziehung besteht, erkannt, wird für diese neue Kommunikationsbeziehung aus dem als Ressourcenpool fungierenden Speicherbereich 30 eine freie Ressource, z. B. ein erstes, zweites, etc. Speichersegment 38, 40 sowie ein erster, zweiter, dritter, etc. Speicherabschnitt 42, 44, 46 in dem jeweiligen Speichersegment 38, 40, ausgewählt. Die jeweilige Ressource wird dann exklusiv für die neue Kommunikationsbeziehung, die spätestens mit der Zuweisung einer bisher freien Ressource zu einer aktiven Kommunikationsbeziehung wird, exklusiv verwendet.

In der Darstellung in FIG 3 ist der als Ressourcenpool fungierende Speicherbereich 30 als Abschnitt in einem dem Empfänger 28 zugeordneten Speicher 48 gezeigt. Der Speicherbereich 30 muss nicht notwendig im lokalen Speicher 48 des Empfängers 28 belegt sein. Genauso kann vorgesehen sein, dass der Speicherbereich 30 in einem nicht dargestellten, nur über den Bus 20 (FIG 1) erreichbaren Speicher belegt ist.

Die Auswahl einer freien Ressource, also eines Speichersegments 38, 40 sowie eines Speicherabschnitts 42 bis 46, erfolgt im Zusammenhang mit dem Erkennen einer neuen Kommunikationsbeziehung anhand von dem Empfänger 28 zugeordneten zugelassenen Senderkennungen 50, die gemäß der Darstellung in FIG 3 in einer in dem Speicher 48 abgelegten Datenbasis 52 für zugelassene Senderkennungen 50 vorgehalten werden, wobei diese Datenbasis 52 auch in jedem anderen für den Empfänger 28 erreichbaren Speicher abgelegt sein kann. Die oder jede zugelassene Senderkennung 52 wird einem jeweiligen Empfänger 28 z. B. während der Projektierung einer Automatisierungslösung zugeordnet. Während einer solchen Projektierung wird festgelegt, welche Kommunikationsbeziehungen zwischen den einzelnen Kommunikationsteilnehmern und/oder den darauf ablaufenden Applikationen erforderlich sind. Damit sind auch die auf Seiten der jeweiligen Sender 26 (FIG 2) zu verwendenden Senderkennungen 32 und entsprechend bei den Automatisierungsgeräten 12 bis 18 (FIG 1), für die aufgrund der Kommunikationsbeziehungen später versandte Telegramme 24 bestimmt sind, also dem jeweiligen Empfänger 28, zugelassene Senderkennungen 50 zuordenbar. Beim Empfang eines Telegramms 24 prüft der jeweilige Empfänger 28 die in dem Telegramm 24 enthaltene Senderkennung 32 anhand der oder jeder ihm zugeordneten zugelassenen Senderkennung 50. Wird zu der empfangenen Senderkennung 32 keine passende zugelassene Senderkennung 50 gefunden, wird das Telegramm 24 abgewiesen und bevorzugt der jeweilige Sender 26 (FIG 2) mit einer diesbezüglichen Meldung, z. B. einer Fehlermeldung (nicht dargestellt), informiert. Wird dagegen zu der empfangenen Senderkennung 32 eine passende zugelassene Senderkennung 50 gefunden, steht fest, dass das empfangene Telegramm 24 für den jeweiligen Empfänger 28 bestimmt ist. Sodann wird anhand der Senderkennung 32 (oder, z. B. wenn Senderkennung 32 und zugelassene Senderkennung 50 nicht identisch sind, anhand der zugelassenen Senderkennung 50) aus dem als Ressourcenpool fungierenden Speicherbereich 30 eine freie Ressource zum Ablegen des Telegramms 24 oder zumindest der in dem Telegramm 24 enthaltenen Daten ausgewählt. Dabei wird gemäß einer bevorzugten Ausführungsform so vorgegangen, dass das Ordnungskriterium 36 in der Senderkennung 32 (oder in der zugelassenen Senderkennung 50) das jeweilige Speichersegment 38, 40 referenziert. Damit wird also bereits während der Projektierung, während derer das Ordnungskriterium 36 festgelegt wird, ein Speicherort für übermittelte Daten zumindest näherungsweise bestimmt. In dem jeweiligen Speichersegment 38, 40 wird dann als freie Ressource ein freier, d. h. derzeit nicht von einer anderen Kommunikationsbeziehung mit dem gleichen Ordnungskriterium 34 verwendeter Speicherabschnitt 42 bis 46 ausgewählt und für die neue Kommunikationsbeziehung und weitere Kommunikation unter dieser Kommunikationsbeziehung genutzt.

Daten, die zur gleichen aktiven Kommunikationsbeziehung gehören und die in aufeinander folgenden Telegrammen 24 beim Empfänger 28 eingehen, werden in dem mit der jeweils ausgewählten Ressource assoziierten Speichersegment/-abschnitt 38, 40; 42 bis 46 zwischengespeichert. Wenn während des Empfangs von aufeinander folgenden Telegrammen 24 einer ersten aktiven Kommunikationsbeziehung beim selben Empfänger 28 Telegramme 24 einer anderen aktiven Kommunikationsbeziehung oder einer neuen Kommunikationsbeziehung eingehen, werden die Daten, die in den Telegrammen 24 anderer aktiver Kommunikationsbeziehungen enthalten sind, den diesen aktiven Kommunikationsbeziehungen exklusiv zugeordneten Ressourcen des Ressourcenpools zugeordnet oder es wird für eine neue Kommunikationsbeziehung eine freie Ressource ausgewählt und die Daten werden sodann dieser Ressource zugeordnet, so dass Kollisionen in jedem Falle, zumindest solange noch freie Ressourcen in dem Ressourcenpool zur Verfügung stehen, vermieden werden.

Nur wenn beim Erkennen einer neuen Kommunikationsbeziehung keine freien Ressourcen in dem Ressourcenpool zur Verfügung stehen, sendet das als Empfänger 28 fungierende jeweilige Automatisierungsgerät 14 bis 18 an den Sender 26, von dem das Telegramm 24, das eine solche neue Kommunikationsbeziehung einleiten würde, stammt, eine diesbezügliche Meldung, also z. B. eine Fehlermeldung, so dass der jeweilige Sender 26 die Übermittlung des oder jedes im Rahmen der derzeit nicht verarbeitbaren Kommunikationsbeziehung zu übermittelnden Telegramms 24 zurückstellt und zu einem späteren Zeitpunkt wiederholt. Eine solche Wiederholung erfolgt so lange, bis auf Seiten des Empfängers 28 eine Ressource frei wird und die Kommunikationsbeziehung entsprechend abgewickelt werden kann.

Damit lässt sich die Erfindung kurz wie folgt darstellen: Es wird ein Verfahren zum Betrieb eines zum Empfangen von Telegrammen 24 vorgesehenen Automatisierungsgerätes 12, 14, 16, 18 sowie ein solches Automatisierungsgerät 12 bis 18 angegeben, das sich dadurch auszeichnet, dass das Automatisierungsgerät 12 bis 18 für eingehende oder empfangene Telegramme 24 einen Ressourcenpool verwaltet, dass das Automatisierungsgerät 12 bis 18 zwischen aktiven und neuen Kommunikationsbeziehungen mit einem entfernten Kommunikationsteilnehmer 12 bis 18 unterscheidet und dass für jede neue Kommunikationsbeziehung aus dem Ressourcenpool eine freie Ressource ausgewählt und daraufhin für diese Kommunikationsbeziehung, die damit zur aktiven Kommunikationsbeziehung wird, verwendet wird.

## Patentansprüche

1. Verfahren zum Betrieb eines zum Empfangen von Telegrammen (24), die zumindest eine einen entfernten Kommunikationsteilnehmer (12, 14, 16, 18) als [S3, Z2-3; S3, Z19-20] Sender (26) identifizierende Senderkennung (32) umfassen, vorgesehenen Automatisierungsgerätes (12, 14, 16, 18),
wobei dem Automatisierungsgerät (12-18) für eingehende oder empfangene Telegramme (24) ein Speicherbereich (30) zugeordnet ist
oder wird, der zumindest ein Speichersegment (38, 40) umfasst, welches zumindest einen Speicherabschnitt (42, 44, 46) aufweist,
**dadurch gekennzeichnet**
**dass** das als Empfänger fungierende [S2, Z38-S3, Z5] Automatisierungsgerät (12-18) anhand der von einem jeweils empfangenen Telegramm (24) umfassten Senderkennung (32) [S11, 26-27] zwischen aktiven und neuen Kommunikationsbeziehungen mit dem entfernten Kommunikationsteilnehmer (12-18) unterscheidet,
wobei eine neue Kommunikationsbeziehung durch den Empfang eines Telegramms (24) mit einer Senderkennung (32), unter der bisher keine Telegramme (24) empfangen wurden, entsteht [S12, 4-9; S12, 27-29], und
**dass** das als Empfänger fungierende Automatisierungsgerät (12-18) [S3, Z3-9] für jede neue Kommunikationsbeziehung aus dem Speicherbereich (30) ein Speichersegment (38, 40) und/oder einen Speicherabschnitt (42-46) auswählt und dieses bzw. dieser daraufhin exklusiv [S12, Z37] für diese Kommunikationsbeziehung, die damit zur aktiven Kommunikationsbeziehung wird, verwendet wird,
wobei die Verwendung eines ausgewählten Speichersegments (38, 40) bzw. eines ausgewählten Speicherabschnitts (42-46) für eine aktive Kommunikationsbeziehung anhand einer den entfernten Kommunikationsteilnehmer (12-18) identifizierenden Senderkennung (32) sichergestellt wird und
wobei die Senderkennung (32) eine den entfernten Kommunikationsteilnehmer (12-18) identifizierende Adresse (34) sowie ein vom jeweiligen entfernten Kommunikationsteilnehmer (12-18) in das jeweilige Telegramm (24) eingefügtes Ordnungskriterium (36) umfasst.

2. Verfahren nach Anspruch 1, wobei das Automatisierungsgerät (12 bis 18) bei einem eingehenden Telegramm (24) die jeweilige Senderkennung (32) anhand von zugelassenen Senderkennungen (50) prüft.

3. Verfahren nach Anspruch 1 oder 2, wobei ein Speichersegment (38, 40) und/oder ein Speicherabschnitt (42 bis 46) nur dann ausgewählt wird, wenn die jeweilige Senderkennung (32) einer zugelassenen Senderkennung (50) entspricht.

4. Verfahren nach Anspruch 3, wobei die Überprüfung der Senderkennung (32) anhand einer zugelassenen Senderkennung (50) durch paarweise Prüfung von Adresse (34) und Ordnungskriterium (36) erfolgt.

5. Verfahren nach Anspruch 4, wobei jeder zugelassenen Senderkennung (50) oder anhand jeder zugelassenen Senderkennung (50) ein Speichersegment (38, 40) und/oder ein Speicherabschnitt (42 bis 46) zugeordnet bzw. auswählbar ist.

6. Verfahren nach Anspruch 5, wobei das Ordnungskriterium (36) einer zugelassenen Senderkennung (32) ein jeweiliges Speichersegment (38, 40) festlegt und wobei in dem Speichersegment (38, 40) ein Speicherabschnitt (42 bis 46) ausgewählt und verwendet wird.

7. Verfahren nach einem der vorangehenden Ansprüche, wobei ein ausgewähltes Speichersegment (38, 40) bzw. ein ausgewählter Speicherabschnitt (42 bis 46) wieder freigegeben wird, wenn ein Datentransfer in der jeweiligen Kommunikationsbeziehung abgeschlossen ist.

8. Verfahren nach einem der vorangehenden Ansprüche, wobei dem entfernten Kommunikationsteilnehmer (12 bis 18) eine Fehlermeldung übermittelt wird, wenn für eine neue Kommunikationsbeziehung kein freies Speichersegment (38, 40) bzw. kein freier Speicherabschnitt (42 bis 46) zur Verfügung steht.

9. Computerprogramm mit durch einen Computer ausführbaren Programmcodeanweisungen zur Implementierung des Verfahrens nach einem der Ansprüche 1 bis 8, wenn das Computerprogramm auf einem Computer ausgeführt wird.

10. Speichermedium mit einem durch einen Computer ausführbaren Computerprogramm gemäß Anspruch 9.

11. Automatisierungsgerät (12, 14, 16, 18), dem für eingehende oder empfangene Telegramme (24), die zumindest eine einen entfernten Kommunikationsteilnehmer (12, 14, 16, 18) als Sender (26) identifizierende Senderkennung (32) umfassen, ein Speicherbereich (30) zugeordnet oder zuordenbar ist, der zumindest ein Speichersegment (38, 40) umfasst, welches zumindest einen Speicherabschnitt (42-46) aufweist,
**dadurch gekennzeichnet,**
**dass** für das Automatisierungsgerät (12-18) eingehende Telegramme (24) anhand der davon jeweils umfassten Senderkennung (32) als zu einer aktiven oder einer neuen Kommunikationsbeziehung mit dem entfernten Kommunikationsteilnehmer (12-18) gehörig unterscheidbar sind,
wobei eine neue Kommunikationsbeziehung durch den Empfang eines Telegramms (24) mit einer Senderkennung (32), unter der bisher keine Telegramme (24) empfangen wurden, entsteht, und
**dass** für jede neue Kommunikationsbeziehung durch das Automatisierungsgerät (12-18) aus dem Speicherbereich (30) ein Speichersegment (38, 40) und/oder ein Speicherabschnitt (42-46) auswählbar und daraufhin exklusiv für diese Kommunikationsbeziehung, die damit zur aktiven Kommunikationsbeziehung wird, verwendbar ist,
wobei die Verwendung eines ausgewählten Speichersegments (38, 40) bzw. eines ausgewählten Speicherabschnitts (42-46) für eine aktive Kommunikationsbeziehung anhand einer den entfernten Kommunikationsteilnehmer (12-18) identifizierenden Senderkennung (32) sichergestellt wird und
wobei die Senderkennung (32) eine den entfernten Kommunikationsteilnehmer (12-18) identifizierende Adresse (34) sowie ein vom jeweiligen entfernten Kommunikationsteilnehmer (12-18) in das jeweilige Telegramm (24) eingefügtes Ordnungskriterium (36) umfasst.

## Claims

1. Method for operating an automation device (12, 14, 16, 18), which includes at least one transmitter identifier (32) which identifies a remote communication participant (12, 14, 16, 18) as [German P3, L2-3; P3, L19-20] a transmitter (26), provided for the receipt of telegrams (24),
wherein a storage area (30), which includes at least one storage segment (38, 40) which has at least one storage block (42, 44, 46), is or becomes assigned to the automation device (12-18) for arriving or received telegrams (24),
**characterised in that**
the automation device (12 to 18) functioning as receiver [German P2, L38-P3, L5] distinguishes between active and new communication relationships with a remote communication participant (12-18) by reference to the transmitter identifier (32) included in a respectively received telegram (24),
wherein a new communication relationship comes into being [German P12, 4-9; P12, 27-29] when a telegram (24) with a transmitter identifier (32), under which no telegrams (24) have been received so far, is received, and
that, for each new communication relationship, the automation device (12-18) functioning as receiver [German P3, L3-9] selects a storage segment (38, 40) and/or a storage block (42-46) from the storage area (30) and uses this exclusively [German P12, L37] thereafter for this communication relationship, which thereby becomes an active communication relationship,
wherein the use of a selected storage segment (38, 40) or a selected storage block (42-46), as applicable, for an active communication relationship is ensured by reference to a transmitter identifier (32) which identifies the remote communication participant (12-18) and
wherein the transmitter identifier (32) includes an address (34) which identifies the remote communication participant (12-18) together with an ordering criterion (36) inserted into the telegram (24) concerned by the remote communication participant (12-18) concerned.

2. Method according to claim 1, wherein the use of a selected storage segment (38, 40) or a selected storage block (42 to 46), as applicable, for an active communication relationship is ensured by reference to a combination of a transmitter identifier (32) which identifies the remote communication participant (12 to 18).

3. Method according to claim 2, wherein the transmitter identifier (32) includes an address (34) which identifies the remote communication participant (12 to 18) together with an ordering criterion (36) inserted into the telegram (24) concerned by the remote communication participant (12 to 18) concerned.

4. Method according to claim 2, wherein the automation device (12 to 18) checks the relevant transmitter identifier (32) for an arriving telegram (24) by reference to permitted transmitter identifiers (50).

5. Method according to claim 3 or 4, wherein a storage segment (38, 40) and/or a storage block (42 to 46) is only selected if the transmitter identifier (32) concerned corresponds to a permitted transmitter identifier (50).

6. Method according to claim 5, wherein the checking of the transmitter identifier (32) is carried out by reference to a permitted transmitter identifier (50) by checking address (34) and ordering criterion (36) pairs.

7. Method according to claim 6, wherein a storage segment (38, 40) and/or a storage block (42 to 46) is assigned to or selectable for each permitted transmitter identifier (50) or by reference to each permitted transmitter identifier (50).

8. Method according to claim 7, wherein the ordering criterion (36) for a permitted transmitter identifier (32) defines a relevant storage segment (38, 40) and wherein a storage block (42 to 46) within the storage segment (38, 40) is selected and used.

9. Method according to one of the preceding claims, wherein a selected storage segment (38, 40) or a selected storage block (42 to 46) is released again when a data transfer for the communication relationship concerned is completed.

10. Method according to one of the preceding claims, wherein an error message is communicated to the remote communication participant (12 to 18) if no free storage segment (38, 40) or no free storage block (42 to 46) is available for a new communication relationship.

11. Automation device (12, 14, 16, 18) to which a storage area (30) for arriving or received telegrams (24), which include at least one transmitter identifier (32) which identifies a remote communication participant (12, 14, 16, 18) as a transmitter (26), is or can be assigned, which includes at least one storage segment (38, 40) having at least one storage block (42-46),
**characterised in that**,
for the automation device (12-18), telegrams (24) which arrive can be distinguished as belonging to an active or a new communication relationship with the remote communication participant (12 to 18) by reference to the transmitter identifier (32) included in each case,
wherein a new communication relationship comes into being when a telegram (24) with a transmitter identifier (32), under which no telegrams (24) have been received so far, is received, and
for each new communication relationship a storage segment (38, 40) and/or a storage block (42-46) can be selected from the storage area (30) by the automation device (12-18), and can then be used exclusively for this communication relationship, which thereafter becomes an active communication relationship,
wherein the use of a selected storage segment (38, 40) or a selected storage block (42-46), as applicable, for an active communication relationship is ensured by reference to a transmitter identifier (32) which identifies the remote communication participant (12-18) and
wherein the transmitter identifier (32) includes an address (34) which identifies the remote communication participant (12-18) together with an ordering criterion (36) inserted into the telegram (24) concerned by the remote communication participant (12-18) concerned.

## Revendications

1. Procédé pour faire fonctionner un appareil (12, 14, 16, 18) d'automatisation prévu pour la réception de télégrammes (24), qui comprennent au moins une caractérisation (32) de l'émetteur identifiant comme [S3, Z2-3, S3, Z19-20] émetteur (26) un participant (12, 14, 16, 18) à la communication éloigné,
dans lequel il est associé à l'appareil (12 à 18) d'automatisation pour des télégrammes (24) entrants ou reçus une zone (30) de mémoire qui comprend au moins un segment (38, 40) de mémoire, lequel a au moins une partie (42, 44, 46) de mémoire,
**caractérisé**
**en ce que** l'appareil (12 à 18) d'automatisation fonctionnant [S2, Z38-S3 Z5] en récepteur fait, à l'aide de la caractérisation (32) [S11, 26-27] d'émetteur comprise dans un télégramme (24) reçu, la distinction entre des relations de communication actives et nouvelles avec le participant (12 à 18) à la communication éloigné,
une nouvelle relation de communication étant créée [S12, 4-9 S12, 27-29] par la réception d'un télégramme (24) ayant une caractérisation (32) d'émetteur sous laquelle jusqu'ici aucun télégramme (24) n'a été reçu et
**en ce que** l'appareil (12-18) [S3, Z3-9] d'automatisation fonctionnant en récepteur choisit pour chaque nouvelle relation de communication, dans la zone (30) de mémoire un segment (38, 40) de mémoire et/ou une partie (42-46) de mémoire et l'utilise exclusivement (S12, Z37) ensuite pour cette relation de communication, qui devient ainsi une relation de communication active,
l'utilisation d'un segment (38, 40) de mémoire choisi ou d'une partie (42 à 46) de mémoire choisie pour une relation de communication active étant assurée à l'aide d'une caractérisation (32) d'émetteur identifiant le participant (12 à 18) à la communication éloigné et
la caractérisation (32) d'émetteur comprenant une adresse (34) identifiant le participant (12 à 18) à la communication éloigné, ainsi qu'un critère (36) d'ordre inséré dans le télégramme (24) par le participant (12 à 18) la communication éloigné.

2. Procédé suivant la revendication 1, dans lequel l'utilisation d'un segment (38, 40) de mémoire sélectionné ou d'une partie (42 à 46) de mémoire sélectionnée pour une relation de communication active est sécurisée au moyen d'une combinaison d'une caractérisation d'émetteur identifiant le participant (12 à 18) à la communication éloigné.

3. Procédé suivant la revendication 2, dans lequel la caractérisation (32) de l'émetteur comprend une adresse (34) identifiant le participant (12 à 18) à la communication éloigné, ainsi qu'un critère (369) d'ordre inséré par le participant (12 à 18) à la communication éloigné dans le télégramme (24) respectif.

4. Procédé suivant la revendication 2, dans lequel l'appareil (12 à 18) d'automatisation contrôle, lorsqu'un télégramme (24) entre, la caractérisation (32) respective de l'émetteur au moyen de caractérisations (50) d'émetteur autorisées.

5. Procédé suivant la revendication 3 ou 4, dans lequel on ne choisit un segment (38, 40) de mémoire et/ou une partie (42 à 46) de mémoire que si la caractérisation (32) d'émetteur respective correspond à une caractérisation (50) d'émetteur autorisée.

6. Procédé suivant la revendication 5, dans lequel on effectue le contrôle de la caractérisation (32) de l'émetteur au moyen d'une caractérisation (50) d'émetteur autorisée en contrôlant paire par paire l'adresse (34) et le critère (36) d'ordre.

7. Procédé suivant la revendication 6, dans lequel on associe à chaque caractérisation (50) d'émetteur autorisée ou au moyen de chaque caractérisation (50) d'émetteur autorisée, un segment (38, 40) de mémoire et/ou une partie (42 à 46) de mémoire ou on peut le choisir.

8. Procédé suivant la revendication 7, dans lequel le critère (36) d'ordre d'une caractérisation (32) d'émetteur autorisée fixe un segment (38, 40) de mémoire respectif et dans lequel on sélectionne et on utilise une partie (42 à 46) de mémoire dans le segment (38, 40) de mémoire.

9. Procédé suivant l'une des revendications précédentes, dans lequel on relibère un segment (38, 40) sélectionné ou une partie (42 à 46) de mémoire sélectionnée lorsqu'un transfert de données dans la relation de communication respective est terminé.

10. Procédé suivant l'une des revendications précédentes, dans lequel on transmet au participant (12 à 18) à la communication éloigné un message d'erreur s'il n'y a pas de segment (38, 40) de mémoire libre ou de partie (42 à 46) de mémoire libre disponible pour une nouvelle relation de communication.

11. Appareil (12, 14, 16, 18) d'automatisation, auquel est associé ou peut l'être, pour des télégrammes (24) entrant ou reçus qui comprennent au moins une caractérisation (32) d'émetteur identifiant comme émetteur un participant (12, 14, 16, 18) à la communication éloigné, une zone (30) de mémoire, qui comprend au moins un segment (38, 40) de mémoire, lequel a au moins une partie (42 à 46) de mémoire **caractérisé en ce que**,
pour l'appareil (12 à 18) d'automatisation des télégrammes (24) entrants peuvent, à l'aide de l'identification (32) d'émetteur qui s'y trouve être distingués comme appartenant à une relation de communication active ou nouvelle avec le participant (12 à 18) à la communication éloigné,
une relation de communication nouvelle étant créée par la réception d'un télégramme (24) ayant une caractérisation (32) d'émetteur pour laquelle jusqu' ici aucun télégramme n'a été reçu et
**en ce que** pour chaque relation de communication nouvelle il peut être choisi par l'appareil (12 à 18) d'automatisation dans la zone (30) de mémoire un segment (38, 40) de mémoire et/ou une partie (42, 46) de mémoire et être utilisé ensuite exclusivement pour cette relation de communication, qui devient ainsi une relation de communication active,
l'utilisation d'un segment (38, 40) de mémoire choisi ou d'une partie (42, 46) de mémoire choisie pour une relation de communication active étant assurée À l'aide d'une caractérisation (32) d'émetteur identifiant le participant (12 à 18) à la communication éloigné et
la caractérisation (32) d'émetteur comprenant une adresse (34) identifiant le participant (12 à 18) à la communication éloigné ainsi qu'un critère (36) d'ordre inséré dans le télégramme (24) par le participant (12 à 18) à la communication éloigné.
